Europäisches Patentamt

European Patent Office

Office européen des brevets

(19)

(11) **EP 0 786 712 B1**

(12) **EUROPÄISCHE PATENTSCHRIFT**

(45) Veröffentlichungstag und Bekanntmachung des Hinweises auf die Patenterteilung:
**04.04.2001 Patentblatt 2001/14**

(51) Int Cl.[7]: **G05D 27/02**, F24F 11/08

(21) Anmeldenummer: **97100822.2**

(22) Anmeldetag: **20.01.1997**

(54) **Verfahren und Vorrichtung zur Regelung der Lufttemperatur und der Luftfeuchte in einer Vollklimaanlage**

Method and device for controlling air temperature and humidity in an air conditioning system

Méthode et dispositif de régulation de la température et de l'humidité dans une installation de climatisation

(84) Benannte Vertragsstaaten:
**AT CH DE FR GB IT LI NL SE**

(30) Priorität: **29.01.1996 EP 96101184**

(43) Veröffentlichungstag der Anmeldung:
**30.07.1997 Patentblatt 1997/31**

(73) Patentinhaber: **Siemens Building Technologies AG**
**6300 Zug (CH)**

(72) Erfinder:
• **Gübeli, Markus**
**8708 Männedorf (CH)**

• **Bachmann, Guido**
**8739 Rieden (CH)**

(56) Entgegenhaltungen:
**EP-A- 0 238 979          DE-A- 3 439 288**
**FR-A- 2 644 228**

• **AUTOMATISIERUNGSTECHNISCHE PRAXIS, Bd. 28, Nr. 4, April 1986, MÜNCHEN, DEUTSCHLAND, Seiten 184-190, XP002003975 P. BORK: "Energieeinsparung bei Lüftungs- und Klimaanlagen mit Hilfe verbesserter Automatisierungskonzepte"**

## Beschreibung

Die vorliegende Erfindung betrifft ein Verfahren und eine Vorrichtung zur Regelung der Lufttemperatur und der Luftfeuchte in einer Vollklimaanlage mit Energierückgewinnung aus der Raum- oder Abluft, bei welchem Regelsignale für Lufttemperatur und Luftfeuchte und für die Energierückgewinnung gewonnen werden.

Derartige Verfahren und Vorrichtungen sind beispielsweise aus DE 34 39 288 A, aus Automatisierungstechnische Praxis atp 28/4 1986, S. 184 bis 190, aus EP 238 979 A, aus FR 2 644 228 A und aus EP 588 052 bekannt.

Bei bekannten Verfahren dieser Art wird zwischen der Raum- oder Abluft und der Aussenluft ein Enthalpievergleich vorgenommen und die Energierückgewinnung nach Bedarf gesteuert. Das hat zur Folge, dass die Energierückgewinnung nicht in allen Gebieten des bekannten hx-Diagramms richtig angesteuert und daher nicht optimal eingesetzt wird. Letzteres wäre aber wesentlich, weil bei richtigem Betrieb der Energierückgewinnung sehr viel an Energie und somit an Kosten eingespart werden kann.

Durch die Erfindung sollen nun ein Verfahren und eine Vorrichtung zum energie- und kostenoptimierten Betrieb einer Vollklimaanlage mit Energierückgewinnung angegeben werden.

Diese Aufgabe wird erfindungsgemäss dadurch gelöst, dass aus dem Temperaturbedarf und dem Feuchtebedarf sowie aus der Anlagenkonfiguration zwei Richtungsvektoren und deren Gewichtung bestimmt, die Richtungsvektoren mit ihrer Gewichtung multipliziert und die resultierenden Regelvektoren in das tx-Diagramm mit dem Zuluftsollwert als Nullpunkt eingetragen werden, dass aus den Istwerten für Temperatur und Feuchte der Raum- oder Abluft und der Aussenluft ein Vektor bestimmt wird und die genannten Regelvektoren und der Nullpunkt auf diesen projiziert werden, und dass aus diesen Projektionen das Regelsignal für die Energierückgewinnung bestimmt wird.

Eine erste bevorzugte Ausführungsform des erfindungsgemässen Verfahrens ist dadurch gekennzeichnet, dass die Bestimmung des Regelsignals für die Energierückgewinnung aus den Projektionen dadurch erfolgt, dass die Projektionen der Regelvektoren von der Projektion des Zuluftsollwerts aus vektoriell addiert werden.

Ein zweites bevorzugtes Ausführungsbeispiel des erfindungsgemässen Verfahrens ist dadurch gekennzeichnet, dass im hx-Diagramm um den Raumluftsollwert ein Behaglichkeitsfeld definiert wird, und dass von einem ausserhalb des Behaglichkeitsfeldes liegenden Istwert mit minimalen Kosten auf die Grenzen des Behaglichkeitsfeldes geregelt und innerhalb des Behaglichkeitsfeldes nur rückgewonnene Energie verbraucht wird.

Das erfindungsgemässe Verfahren umfasst zwei wesentliche Schritte, einerseits die Gewinnung des Regelsignals für die Energierückgewinnung, und andererseits die Regelstrategie, dass der Regler bei Handlungsbedarf nur auf die Grenzen des Behaglichkeitsfeldes geregelt wird. Die erfindungsgemässe Gewinnung des Regelsignals für die Energierückgewinnung ermöglicht eine Berücksichtigung der Kosten der möglichen Aktionen, das sind Befeuchten, Heizen, Kühlen und Entfeuchten, bei der Bestimmung der Regelvektoren und somit eine Minimierung der Kosten.

Auch die Regelstrategie minimiert die Kosten, indem einerseits innerhalb des Behaglichkeitsfeldes der Regler nicht aktiv ist und nur mit der Energierückgewinnung gearbeitet wird, und indem andererseits bei der Regelung vom Istwert auf die Grenze des Behaglichkeitsfeldes die kostengünstigste Variante gewählt wird. Diese beiden Schritte sind grundsätzlich voneinander unabhängig, führen aber selbstverständlich bei gemeinsamer Anwendung zum besten Ergebnis.

Die Erfindung betrifft weiter eine Vorrichtung zur Durchführung des genannten Verfahrens mit Mitteln zur Regelung der Lufttemperatur und der Luftfeuchte, mit Mitteln zur Energierückgewinnung aus der Raum- oder Abluft und mit einem Regler, welcher den genannten Mitteln zugeordnet ist.

Die erfindungsgemässe Vorrichtung ist dadurch gekennzeichnet, dass der Regler Mittel zur Bestimmung der Richtungs- und der Regelvektoren sowie zur Gewinnung des Regelsignals für die Energierückgewinnung enthält.

Eine bevorzugte Ausführungsform der erfindungsgemässen Regelvorrichtung ist dadurch gekennzeichnet, dass der Regler Mittel zur Definition eines Behaglichkeitsfeldes und zur Durchführung einer auf Energie- und Kostenminimierung gerichteten Regelstrategie enthält.

Im folgenden wird die Erfindung anhand eines Ausführungsbeispiels und der Zeichnungen näher erläutert; es zeigt:

Fig. 1      ein Blockschema des Reglers der erfindungsgemässen Vorrichtung,
Fig. 2      ein Blockschema des dynamischen Reglers des Reglers von Fig. 1,
Fig. 3      ein Diagramm zur Funktionserläuterung,
Fig. 4      ein Blockschema der Energierückgewinnung des Reglers von Fig. 1,
Fig. 5, 6   Diagramme zur Erläuterung der Funktionsweise der Energierückgewinnung,
Fig. 7      ein Blockschema der Aktionsstrategie des Reglers von Fig. 1; und
Fig. 8      ein Diagramm zur Erläuterung der Funktionsweise des Reglers.

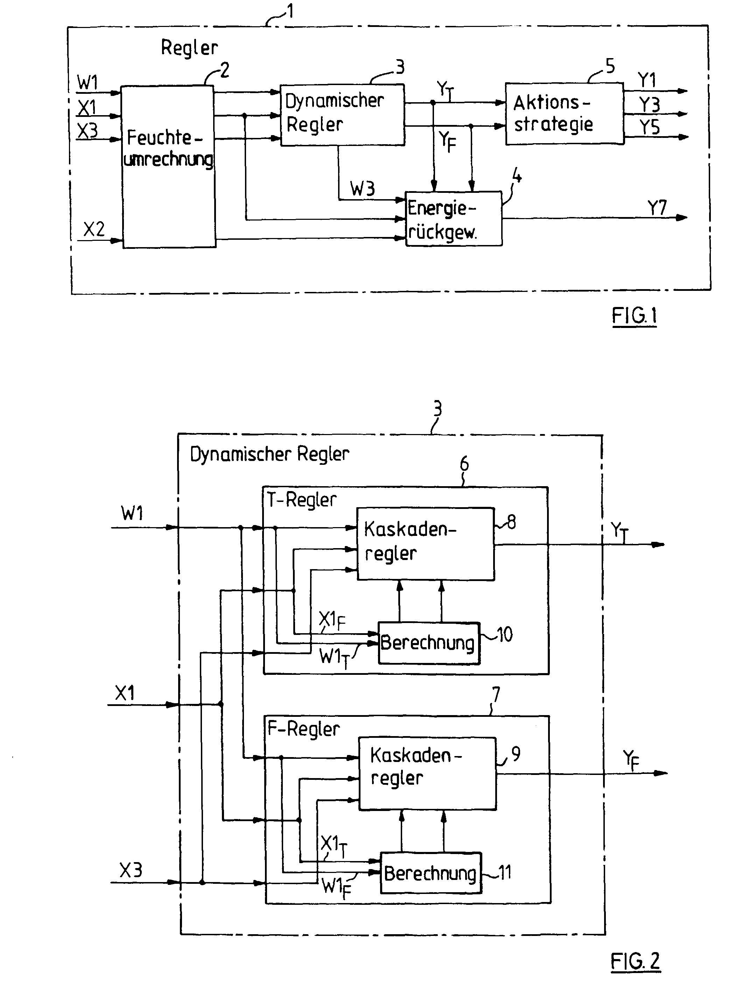

Der in Fig. 1 dargestellte Regler 1 besteht im wesentlichen aus vier Blöcken, einer Feuchteumrechnung 2, einem dynamischen Regler 3, einem mit Energierückgewinnung bezeichneten Block 4 zur Steuerung der Rückgewinnung von Wärme und Feuchte aus der Raum- oder Abluft und aus einem mit Aktionsstrategie bezeichneten Block 5. Die Feuchteumrechnung 2 dient zur Umrechnung der relativen in die absolute Feuchte. Der dynamische Regler 3 übernimmt die Regelung der Klimaanlage und enthält je einen Raum-/Zuluft -Kaskadenregler für die Regulierung der Temperatur und der absoluten Feuchte, wobei die beiden Regelkreise dank der Umrechnung von relativer in absoluter Feuchte entkoppelt werden, was ein besseres dynamisches Verhalten des Regelkreises zur Folge hat.

In der Energierückgewinnung 4 erfolgt die optimale Steuerung der Regenerierung von Wärme und Feuchte und in der Aktionsstrategie 5 wird die Umsetzung der bipolar aus dem dynamischen Regler 3 kommenden Bedarfssignale in unipolare Stellsignale für die stetigen Ausgänge vollzogen.

Die in Fig. 1 eingezeichneten Signale haben folgende Bedeutung:

| W1 | Sollwert Raumluft | $Y_T$ | Temperaturbedarf |
|---|---|---|---|
| W3 | Sollwert Zuluft | $Y_F$ | Feuchtebedarf |
| X1 | Istwert Raumluft | Y1 | Befehl heizen |
| X2 | Istwert Aussenluft | Y3 | Befehl kühlen, entfeuchten |
| X3 | Istwert Zuluft | Y5 | Befehl befeuchten |
| | | Y7 | Befehl Energierückgewinnung |

Der Block 2 rechnet die Feuchten des Sollwertes W1 und der Istwerte X1, X2 und X3 von relative in absolute Feuchten um. Zu dieser Umrechnung werden zusätzlich die Temperaturen der Luftzustände und der Luftdruck benötigt.

Der dynamische Regler 3 besteht gemäss Fig. 2 aus einem Temperaturregler 6 und einem Absolutfeuchte-Regler 7, die beiden aus einem Kaskadenregler 8 bzw. 9 und einer Berechnungsstufe 10 bzw. 11 bestehen. Sowohl dem Temperaturregler 6 als auch dem Feuchteregler 7 sind die Grössen W1, X1 und X3 zugeführt, von denen die jeweiligen Temperaturwerte in den Kaskadenregler 8 und die jeweiligen Feuchtewerte in den Kaskadenregler 9 gelangen. Der Berechnungsstufe 10 ist der Temperaturwert $W1_T$ und der Feuchtewert $X1_F$ zugeführt, der Berechnungsstufe 11 der Feuchtewert $W1_F$ und der Temperaturwert $X1_T$.

In den Berechnungstufen werden die Minimal- und die Maximalbegrenzungen von W1 berechnet, und zwar in der Berechnungsstufe 10 für den Temperaturwert und in der Berechnungsstufe 11 für den Feuchtewert. Jeder der beiden Kaskadenregler 8 und 9 besteht im wesentlichen aus einer Stufe zur Schiebung des Sollwerts W1, aus einem Raumregler und aus einem Zuluftregler. Die Schiebung des Sollwerts W1 zwischen der von der jeweiligen Berechnungstufe 10 oder 11 berechneten Minimal- und Maximalbegrenzung erfolgt anhand des Bedarfs $Y_T$ bzw. $Y_F$ und zwar so, dass der Sollwert des Zuluftreglers innerhalb kleiner Grenzen von $Y_T$ und $Y_F$ dem Istwert nachgeführt wird. Der sich bei der Schiebung ergebende Wert von W1 bildet den Sollwert für den Raumregler.

Der Raumregler ist ein PI-Regler (Regler mit Proportional- und Integralanteil); er berechnet den Zuluftsollwert W3 und führt diesen dem Zuluftregler zu. Der Zuluftregler ist ein PID-Regler (Regler mit Proportional-, Integral- und Differentialanteil), der das Bedarfssignal für den Regelkreis berechnet. Der Zuluftsollwert W3 wird auch nach aussen an die Steuerstufe 4 für die Energierückgewinnung (Fig. 1) geführt.

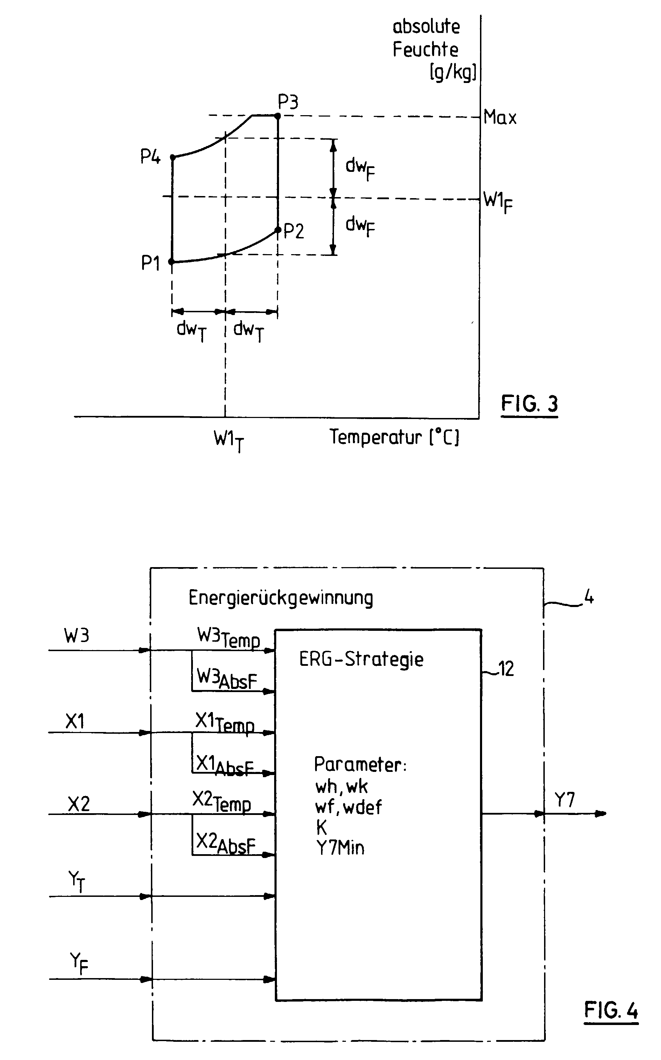

Neben der beschriebenen Regulierung der Temperatur und der Feuchte hat der dynamische Regler 3 zusätzlich die Kontrolle über das sogenannte Behaglichkeitsfeld, das in Fig. 3 schematisch dargestellt ist. Dieses ist im hx-Diagramm durch vier Punkte P1 bis P4 bestimmt, deren Berechnung durch Eingabe der beiden Sollwerte $W1_T$ und $W1_F$ für die Temperatur und die absolute Feuchte und der energiefreien Zonen ($dw_T$ und $dw_F$) erfolgt. Diese energiefreien Zonen, die positiv und negativ um den Sollwert wirken, sind Erfahrungswerte. Wenn zum Beispiel die Werte für W1 22° C und 50% relative Luftfeuchtigkeit betragen, dann wird sich ein Mensch auch dann noch wohlfühlen, wenn diese Werte um etwa ±20% streuen, wenn die Temperatur also zwischen rund 20° und 24° C liegt.

Die Berechnung des Punkts P1 beispielsweise erfolgt nach den Formeln:

$$P1_T = W1_T - dw_T$$

und

$$P1_F = W1_F - dw_F,$$

wobei die Feuchtewerte relative Feuchtewerte sind, die mittels der Feuchteumrechnung 2 in Absolutwerte umgerechnet werden.

Die Temperaturwerte und die absoluten Feuchtewerte für die Punkte P1 bis P4 werden den Berechnungsstufen 10 und 11 des Temperaturreglers 6 bzw. des Feuchtereglers 7 (Fig. 2) zugeführt und werden von diesen bei

3

der Berechnung der Minimal- und Maximalbegrenzung der Sollwerte $W1_T$ und $W1_F$ berücksicht. Dadurch ist gewährleistet, dass diese Sollwerte nicht ausserhalb des Behaglichkeitsfeldes zu liegen kommen. Am Ausgang des dynamischen Reglers 3 sind die beiden Signale $Y_T$ und $Y_F$ für den Temperatur- bzw. Feuchtebedarf erhältlich, die einerseits der Aktionsstrategie 5 und andererseits der Energierückgewinnung 4 (Fig. 1) zugeführt sind.

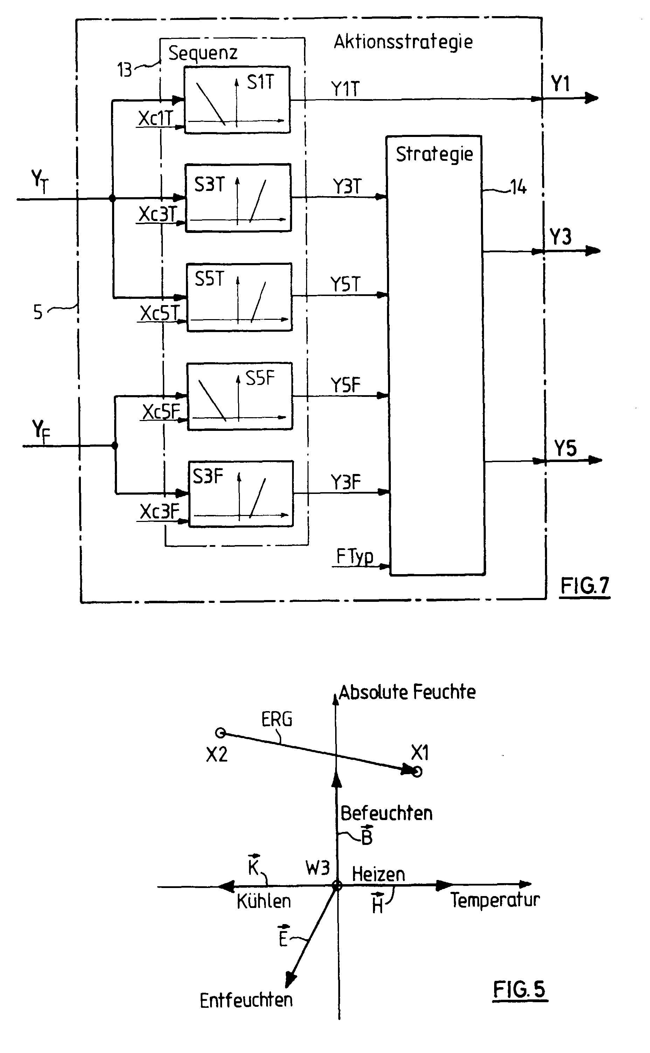

Anhand der Figuren 4 bis 6 sollen nun die Energierückgewinnung 4 und deren Funktionsweise erläutert werden, wobei Fig. 4 ein Blockschema der Energierückgewinnung, Fig. 5 eine Darstellung der Vektoren im tx-Diagramm und Fig. 6 ein Diagramm zur Illustration der Arbeitsweise der Energierückgewinnung 4 zeigt. In der folgenden Tabelle 1 sind die Ein- und Ausgangsgrössen und die Parameter der Energierückgewinnung zusammengestellt.

Tabelle 1

| Grösse | Name | Beschreibung | Einheit |
|---|---|---|---|
| Eingänge | $W3_{Temp}$ | Temperaturzuluftsollwert | °C |
| | $W3_{AbsF}$ | Feuchtezuluftsollwert | g/kg |
| | $X1_{Temp}$ | Raumtemperaturistwert | °C |
| | $X1_{AbsF}$ | Raumfeuchteistwert | g/kg |
| | $X2_{Temp}$ | Aussentemperaturistwert | °C |
| | $X2_{AbsF}$ | Aussenfeuchteistwert | g/kg |
| | $Y_T$ | Temperatubedarf | °C |
| | $Y_F$ | Feuchtebedarf | g/kg |
| Ausgang | Y7 | Stellsignal ERG | V |
| Parameter | ERGTyp | Typ der Energierückgewinnung<br>- Umluftklappen<br>- ERG-Rad<br>-Plattenwärmetauscher | - |
| | wh | Gewichtung Heizen | - |
| | wk | Gewichtung Kühlen | - |
| | wf | Gewichtung Befeuchten | - |
| | wdef | Gewichtung Entfeuchten | - |
| | K | Verstärkung der Bedarfssignale | - |
| | Y7Min | Minimumbeschränkung von Y7 (nur für Umluftklappen: minimaler Aussenluftanteil) | - |

Die Energierückgewinnung 4 enthält ein mit dem Bezugszeichen 12 bezeichnetes Modul ERG-Strategie, welches aus dem Zuluftsollwert, der Abluft, der Aussenluft und den beiden Bedarfssignalen das optimale Stellsignal für die Energierückgewinnung berechnet. Die ERG-Strategie lässt sich am besten anhand des in Fig. 5 dargestellten tx-Diagramms zeigen, in welchem auf der Abszisse die Temperatur und auf der Ordinate die absolute Feuchte eingetragen ist. In dieses Diagramm werden nun die Bedarfssignale "Heizen", "Kühlen", "Befeuchten" und "Entfeuchten" nach erfolgter Gewichtung und Multiplikation mit dem entsprechenden Richtungsvektor und der Verstärkung K als Regelvektoren $\vec{H}$, $\vec{K}$, $\vec{B}$ und $\vec{E}$.eingetragen. Die Verstärkung K dient zur Abstimmung der Energierückgewinnung auf den Regelkreis. Die Gewichtungen und die Richtungsvektoren sind in der folgenden Tabelle 2 angegeben:

Tabelle 2

| Bedarf | Gewichtung | | Richtungsvektor |
|---|---|---|---|
| | mit Dampf | mit Wäscher | |
| Heizen $Y_T < 0$ | 1 | 1 | [-1 \| 0] |
| Kühlen $Y_T > 0$ | 2 | 0.5 | [-1 \| 0] |

Tabelle 2   (fortgesetzt)

| Bedarf | Gewichtung | | Richtungsvektor |
|---|---|---|---|
| | mit Dampf | mit Wäscher | |
| Befeuchten $Y_F < 0$ | 1 | 1 | [0 | -1] |
| Entfeuchten $Y_F > 0$ | 3 | 3 | [-0.37 | -0.93] |

Zusätzlich zu den Vektoren für die Bedarfssignale enthält das in Fig. 5 dargestellte tx-Diagramm noch einen mit "ERG" bezeichneten Vektor, der die Verbindung zwischen der Raum- oder Abluft X1 und der Aussenluft X2 darstellt. Da sich die verschiedenen Typen der Energierückgewinnung unterschiedlich verhalten, muss der Vektor ERG dem Typ der Energierückgewinnung angepasst werden. Diese Anpassung erfolgt mit dem in Tabelle 1 angegebenen Parameter ERGTyp, der aus den zwei Faktoren $\Phi_T$ (Rückgewinnungsgrad der Temperatur) und $\Phi_F$ (Rückgewinnungsgrad der Feuchte) besteht. Diese Faktoren haben für die verschiedenen Typen der Energierückgewinnung die in Tabelle 3 angegebenen Werte.

Der Vektor ERG wird je nach dem Typ der Energierückgewinnung mit den jeweiligen Faktoren $\Phi_T$ und $\Phi_F$ multipliziert und verändert sich dadurch entsprechend. Für die Abarbeitung der Energierückgewinnung wird immer der sich aus der Multiplikation mit den genannten Faktoren ergebende resultierende Vektor ERG verwendet.

Tabelle 3

| ERG-Typ | $\Phi_T$ | $\Phi_F$ |
|---|---|---|
| Umluftklappen | 1 | 1 |
| ERG-Rad | 0.9 | 0.6 |
| Plattenwärmetauscher | 0.9 | 0 |

Fig. 6 zeigt ein Beispiel für die Arbeitsweise der Energierückgewinnung 4:

- Der Temperaturbedarf $Y_T$ und der Feuchtebedarf $Y_F$ bestimmen den jeweils zu verwendenen Richtungsvektor $\vec{y}_T$ bzw. $\vec{y}_F$ und die Anlagenkonfiguration bestimmt die Gewichtung der Richtungsvektoren (siehe Tabelle 2) und die Verstärkung der Bedarfssignale.
- Temperaturbedarf und Feuchtebedarf $Y_T$ bzw. $Y_F$ werden mit der entsprechenden Gewichtung, dem Richtungsvektor und der Verstärkung multipliziert und das Ergebnis wird in das tx-Diagramm mit dem Nullpunkt W3 (Zuluftsollwert) eingetragen. Aus dieser Operation ergibt sich im Beispiel von Fig. 6 aus $Y_T$ der mit $\vec{K}$ bezeichnete Regelvektor "Kühlen" und aus $Y_F$ der mit $\vec{B}$ bezeichnete Regelvektor "Befeuchten". Je nach Bedarf ergeben sich andere Vektoren mit verschiedenen Längen.
- Die resultierenden Regelvektoren $\vec{K}$ und $\vec{B}$ sowie W3 werden auf den nach dem weiter oben beschriebenen Verfahren (siehe Tabelle 3) bestimmten Vektor ERG projiziert und die Projektionen werden vom Projektionspunkt W3P des Zuluftsollwerts W3 aus vektoriell addiert, wodurch ein Punkt Y7 entsteht, der das Stellsignal der Energierückgewinnung 4 (Fig. 4) in Form einer Ausgangsspannung angibt.
- Das Minimum Y7Min dieser Ausgangsspannung befindet sich bei X1 und das Maximum Y7Max bei X2. Durch Interpolation kann nun die Spannung bei Y7 ermittelt werden. Diese ist die Spannung, welche auf den Ausgang Y7 wirkt.

Anschliessend wird anhand von Figuren 7 die Aktionsstrategie 5 (Fig. 1) erläutert. In der folgenden Tabelle 4 sind die Ein- und Ausgangsgrössen und die Parameter der Aktionsstrategie 5 zusammengestellt.

Tabelle 4

| Grösse | Name | Beschreibung | Einheit |
|---|---|---|---|
| Eingänge | $Y_T$ | Bedarfssignal Temperaturregler | $^\circ$C |
| | $Y_F$ | Bedarfssignal Feuchteregler | g/kg |
| Ausgänge | Y1 | Stellsignal Heizen | V |
| | Y3 | Stellsignal Kühlen/Entfeuchten | V |
| | Y5 | Stellsignal Befeuchten | V |

Tabelle 4 (fortgesetzt)

| Grösse | Name | Beschreibung | Einheit |
|---|---|---|---|
| Parameter | Xc1T | Stellwirkung Heizen | °C |
| | Xc3T | Stellwirkung Kühlen mit Kühlregister | °C |
| | Xc5T | Stellwirkung Kühlen mit Wäscher | °C |
| | Xc3F | Stellwirkung Entfeuchten mit Kühlregister | g/kg |
| | Xc5F | Stellwirkung Befeuchten | g/kg |
| | FTyp | Typ der Befeuchtung<br>• Dampfbefeuchter<br>• Wäscher | - |

In der Aktionsstrategie 5, die darstellungsgemäss aus zwei mit "Sequenz" und "Strategie" bezeichneten Modulen 13 bzw. 14 besteht, werden die bipolaren, d.h. positiven und negativen, Bedarfssignale $Y_T$ und $Y_F$ in unipolare Stellsignale für stetige Ausgangssesquenzen umgewandelt, was in den einzelnen Stufen des Sequenzmoduls 13 erfolgt. An den Ausgängen des Sequenzmoduls 13 sind fünf Signale vorhanden, die durch geeignete Verknüpfung im Strategiemodul 14 an den Typ der Befeuchtung angepasst werden.

Das Strategiemodul 14 normiert den entsprechenden Prozess so, dass die Kreisverstärkung eins wird. Das bedeutet, dass der maximale Pegel der Ausgangssignale der maximalen Temperaturspreizung der Heizregister entspricht. Den Bedarfssignalen $Y_T$ und $Y_F$ werden Sequenzen nachgeschaltet, wobei das dem Temperaturregelkreis entstammende Bedarfssignal $Y_T$ mit einer Heizsequenz S 1T (obere Stufe) und zwei Kühlsequenzen S3T und S5T (zweite bzw. dritte Stufe von oben) und das Bedarfssignal $Y_F$ mit einer Befeuchtesequenz S5F und einer Entfeuchtesequenz S3F beschaltet wird.

Die Heizsequenz S1T wirkt auf negative und die Kühlsequenzen S3T und S5T wirken auf positive Temperaturbedarfssignale $Y_T$. Die Entfeuchtesequenz S3F wirkt auf positive und die Befeuchtesequenz S5F wirkt auf negative Feuchtebedarfssignale $Y_F$. Die eine Kühlsequenz S3T wirkt auf den Kühler, wogegen die zweite Kühlsequenz S5T nur bei einem Wäscher aktiv ist, da mit diesem auch gekühlt werden kann. Weil Wäschen wesentlich günstiger ist als normales Kühlen, kann in diesem Fall zusätzlich Energie gespart werden.

Die Pegel der Ausgangssignale der Stufen des Sequenzmoduls 13 sind auf 0 bis 10 V beschränkt; es sind aber auch andere Ausgangspegel denkbar. Das Heizstellsignal Y1T wird nicht weiter verarbeitet und wirkt direkt auf den Ausgang Y1.

Im Strategiemodul 14 werden die Stellsignale Y3 und Y5 in Abhängigkeit von Y3T, Y5T, Y3F und Y5F sowie vom Parameter FTyp berechnet. Für Dampfbefeuchtung gilt dabei folgende Überlegung: Da mit dem Kühlregister auch entfeuchtet werden kann, addiert man das durch die Kühlsequenz S3T beeinflusste Signal Y3T und das durch die Entfeuchtesequenz S3F beeinflusste Signal Y3F und erhält dadurch den Ausgang Y3. Der Ausgang Y5 entspricht dem durch die Befeuchtesequenz S5F beeinflussten Signal Y5F. Das ergibt für die Strategie die folgende Formel: wenn Parameter FTyp = Dampfbefeuchter, dann

$$Y3 = Y3T + Y3F$$

$$Y5 = Y5F$$

wenn Parameter FTyp = wäscher, dann

$$Y3 = Y3T + Y3F$$

$$Y5 = Y5T + Y5F$$

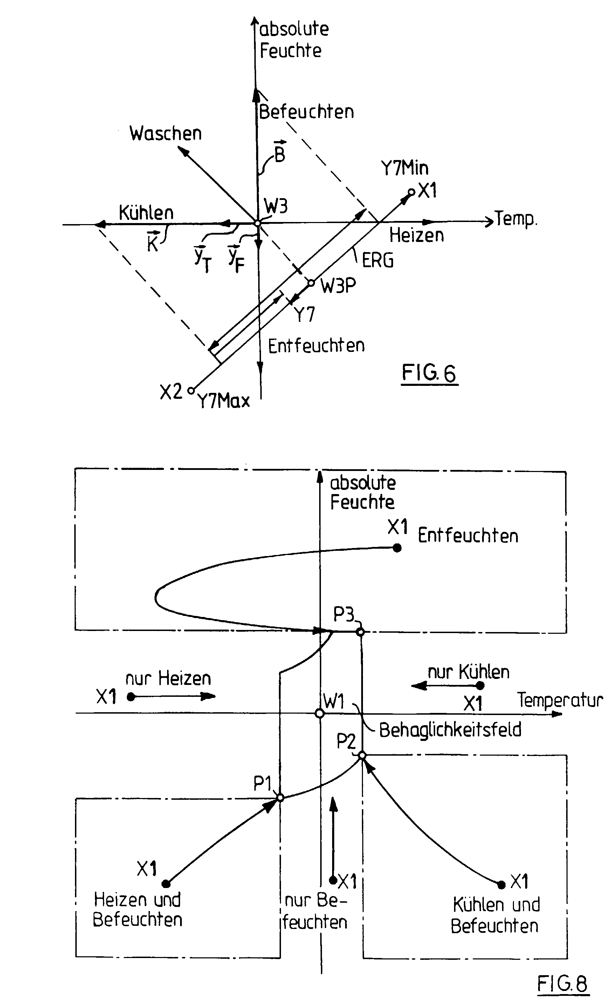

Fig. 8 illustriert die bei der dargestellten Regeleinrichtung angewandte Regelstrategie. Das dargestellte Diagramm zeigt das Behaglichkeitsfeld um den Raumluftsollwert W1 und die Regelstrategien für in den verschiedenen Quadranten des hx-Diagramms liegende Istwerte X1 der Raumluft, die durch kleine schwarze Kreise markiert sind. Das Grundprinzip der Regelstrategie besteht darin, das Behaglichkeitsfeld möglichst effektiv, d.h. zu möglichst geringen Kosten, zu erreichen.

Wie der Figur zu entnehmen ist, ist die Regelstrategie einfach, solange der Wert X1 innerhalb eines etwa T-förmigen Bereichs mit dem horizontalen Balken um die Temperaturachse und mit dem vertikalen Balken um die negative Feuchte-Halbachse liegt, wobei die Breite der Balken etwa die entsprechende Dimension des Behaglichkeitsfeldes aufweist. Wenn der Wert X1 in der linken Hälfte des horizontalen Balkens des genannten T-förmigen Bereichs liegt, erfolgt die Verschiebung von X1 zum Behaglichkeitsfeld nur durch Heizen, wenn der Wert in der rechten Hälfte des horizontalen Balkens liegt, nur durch Kühlen, und wenn der Wert im vertikalen Balken liegt, nur durch Befeuchten.

Die Verhältnisse werden etwas komplizierter, wenn X1 ausserhalb des T-förmigen Bereichs liegt und sich in einem der drei strichpunktiert umrandeten Felder befindet, von denen jedes an einen der Punkte P1, P2 oder P3 des Behaglichkeitsfeldes anschliesst. Das an den Punkt P1 anschliessende Feld liegt im dritten Quadranten des hx-Feldes, das an den Punkt P2 anschliessende im vierten Quadranten und das an den Punkt P3 anschliessende Feld im ersten und zweiten Quadranten. In all diesen Fällen ist für die Verschiebung von X1 an das Behaglichkeitsfeld eine zusammengesetzte Aktion erforderlich.

Wenn X1 im Feld im dritten Quadranten liegt, erfolgt die Verschiebung zum Punkt P1 durch Heizen und Befeuchten, wenn X1 im Feld im vierten Quadranten liegt, erfolgt die Verschiebung nun Punkt P2 durch Kühlen und Befeuchten, und wenn X1 im Feld im ersten und zweiten Quadranten liegt, erfolgt die Verschiebung zum Punkt P3 durch relativ starkes Abkühlen und anschliessendes Erwärmen der Zuluft. Dies deswegen, weil das Abkühlen unter den Taupunkt die Standardmethode zum Entfeuchten ist.

## Patentansprüche

1. Verfahren zur Regelung der Lufttemperatur und der Luftfeuchte in einer Vollklimaanlage mit Energierückgewinnung aus der Raum- oder Abluft, bei welchem Stellsignale (Y1; Y3; Y5) für Lufttemperatur und Luftfeuchte gewonnen werden, dadurch gekennzeichnet,

   dass aus Sollwerten (W1) und Istwerten (X1) der Raumluft ein Temperaturbedarf ($Y_T$) und ein Feuchtebedarf ($Y_F$) berechnet werden,

   dass der Temperaturbedarf ($Y_T$) und der Feuchtebedarf ($Y_F$) mit einem von deren Art abhängigen jeweiligen Richtungsvektor ($\vec{y}_T$ bzw. $\vec{y}_F$) und mit einer von der Anlagenkonfiguration bestimmten Gewichtung (wh oder wk oder wf oder wdef) des jeweiligen Betrags als resultierende Regelvektoren ($\vec{K}, \vec{B}$) in eine zweidimensionale Zustandsdarstellung (tx bzw. hx) eingetragen werden

   wobei in der Zustandsdarstellung (tx bzw. hx) eine erste Dimension die Lufttemperatur und eine zweite Dimension die Luftfeuchtigkeit ist, und

   wobei die Regelvektoren ($\vec{K}, \vec{B}$) mit einem Zuluftsollwert (W3) als Nullpunkt eingetragen werden,

   dass in der Zustandsdarstellung (tx bzw. hx) auf einer zwischen den Istwerten (X1) für Temperatur und Feuchte der Raum- oder Abluft und weiteren Istwerten (X2) für Temperatur und Feuchte der Aussenluft liegenden Geraden ein Vektor (ERG) bestimmt wird und die genannten Regelvektoren ($\vec{K}, \vec{B}$) und der Nullpunkt (W3) auf diesen projiziert werden, und

   dass aus diesen Projektionen ein Stellsignal (Y7) für die Energierückgewinnung bestimmt wird.

2. Verfahren nach Anspruch 1, dadurch gekennzeichnet, dass die Bestimmung des Stellsignals (Y7) für die Energierückgewinnung aus den Projektionen dadurch erfolgt, dass die Projektionen der beiden Regelvektoren ($\vec{K}, \vec{B}$) von der Projektion (W3P) des Zuluftsollwerts (W3) aus vektoriell addiert werden.

3. Verfahren nach Anspruch 1 oder 2, dadurch gekennzeichnet, dass in der Zustandsdarstellung (tx bzw. hx) um den Raumluftsollwert (W1) ein Behaglichkeitsfeld definiert wird, und dass von einem ausserhalb des Behaglichkeitsfeldes liegenden Istwert (X1) mit minimalen Kosten auf die Grenzen des Behaglichkeitsfeldes geregelt und innerhalb des Behaglichkeitsfeldes nur rückgewonnene Energie verbraucht wird.

4. Verfahren nach einem der Ansprüche 1 bis 3, dadurch gekennzeichnet, dass die Regelung auf die absolute Luftfeuchte ausgerichtet ist und dass diese anhand der Temperatur und der relativen Feuchte berechnet wird.

**5.** Verfahren nach einem der Ansprüche 1 bis 4, dadurch gekennzeichnet, dass bei der Bestimmung der Regelvektoren ($\vec{K}$, $\vec{B}$) die Gewichtung der möglichen Aktionen anhand von deren Kosten erfolgt.

**6.** Vorrichtung zur Durchführung des Verfahrens nach Anspruch 1, mit Mitteln zur Regelung der Lufttemperatur und der Luftfeuchte in einer Vollklimaanlage und mit Mitteln zur Energierückgewinnung aus der Raum- oder Abluft, gekennzeichnet durch einen Regler (1),

der erste Mittel (2, 3) aufweist, durch welche aus Sollwerten (W1) und Istwerten (X1) der Raumluft ein Temperaturbedarf ($Y_T$) und ein Feuchtebedarf ($Y_F$) berechenbar sind,

der zweite Mittel (4) aufweist, durch welche der Temperaturbedarf ($Y_T$) und der Feuchtebedarf ($Y_F$) mit einem von deren Art abhängigen jeweiligen Richtungsvektor ($\vec{y}_T$ bzw. $\vec{y}_F$) und mit einer von der Anlagenkonfiguration bestimmten Gewichtung (wh oder wk oder wf oder wdef) des jeweiligen Betrags als resultierende Regelvektoren ($\vec{K}$, $\vec{B}$) derart in eine Zustandsdarstellung (tx bzw. hx) eintragbar sind,

dass die Regelvektoren ($\vec{K}$, $\vec{B}$) als Nullpunkt einen Zuluftsollwert (W3) aufweisen,

und weiter in der Zustandsdarstellung (tx bzw. hx) auf einer zwischen den Istwerten (X1) für Temperatur und Feuchte der Raum- oder Abluft und weiteren Istwerten (X2) für Temperatur und Feuchte der Aussenluft liegenden Geraden ein Vektor (ERG) bestimmbar ist und die genannten Regelvektoren ($\vec{K}$, $\vec{B}$) und der Nullpunkt (W3) auf diesen projezierbar sind,

und weiter aus diesen Projektionen ein Stellsignal (Y7) für die Energierückgewinnung generierbar ist.

**7.** Vorrichtung nach Anspruch 6, dadurch gekennzeichnet, dass der Regler (1) weiter Mittel (5) aufweist, durch welche in der Zustandsdarstellung (tx bzw. hx) um den Raumluftsollwert (W1) ein Behaglichkeitsfeld definiert ist, und durch welche bei einem ausserhalb des Behaglichkeitsfeldes liegenden Istwert (X1) dieser auf die Grenzen des Behaglichkeitsfeldes regelbar ist.

**Claims**

**1.** Method for controlling the air temperature and the air humidity in a full air conditioning system with energy recovery from the ambient or exhaust air, in which setting signals (Y1; Y3; Y5) are obtained for air temperature and air humidity, characterised in that a temperature requirement ($Y_T$) and a humidity requirement ($Y_F$) are calculated from desired values (W1) and actual values (X1) of the ambient air, in that the temperature requirement ($Y_T$) and the humidity requirement ($Y_F$) are entered, together with a directional vector ($y_T$ or respectively $y_F$) dependent upon the type thereof, and with a weighting (wh or wk or wf or wdef), determined by the configuration of the system, of the respective amount as resulting control vectors (K, B) into a two dimensional status representation (tx or respectively hx), wherein in the status representation (tx or respectively hx), a first dimension is the air temperature and a second dimension is the air humidity, and wherein the control vectors (K, B) are entered with an air intake desired value (W3) as the zero point, in that in the status representation (tx or respectively hx), a vector (ERG) is determined on a line between the actual values (X1) for temperature and humidity of the ambient or exhaust air and further actual values (X2) for temperature and humidity of the outside air, and the control vectors (K, B) described and the zero point (W3) are projected onto it, and in that from these projections a setting signal (Y7) for energy recovery is determined.

**2.** Method according to claim 1, characterised in that the determination of the setting signal (Y7) for energy recovery is done from the projections, in that the projections of the two control vectors (K, B) from the projection (WP3) of the air intake desired value (W3) are added to one another vectorially.

**3.** Method according to claim 1 or 2, characterised in that in the status representation (tx or respectively hx) a comfort zone is defined around the ambient air desired value (W1), and in that an actual value (X1) outside the comfort zone can be adjusted with minimal costs to the limits of the comfort zone, and within the comfort zone only recovered energy is consumed.

**4.** Method according to one of claims 1 to 3, characterised in that control is directed towards the absolute air humidity, and in that this is calculated with reference to the temperature and the relative humidity.

**5.** Method according to one of claims 1 to 4, characterised in that when the control vectors (K, B) are determined, the weighting of the possible actions is done with reference to the costs thereof.

**6.** Device for implementing the method according to claim 1, with means for controlling the air temperature and the air humidity in an air conditioning system, and with means for energy recovery from the ambient or exhaust air, characterised by a controller (1) which is provided with first means (2, 3), by means of which a temperature requirement $Y_T$) and a humidity requirement ($Y_F$) can be calculated from desired values (W1) and actual values (X1) of the ambient air, which is provided with second means (4) by means of which the temperature requirement ($Y_T$) and the humidity requirement ($Y_F$) can be entered with a directional vector ($y_T$ or respectively $y_F$), dependent upon the type thereof, and with a weighting (wh or wk or wf or wdef), determined by the system configuration, of the respective amount as resulting control vectors (K, B) such that the control vectors (K, B) have an air intake desired value (W3) as the zero point, and further in the status representation (tx or respectively hx) a vector (ERG) can be determined on a line between the actual values (X1) for temperature and humidity of the ambient or exhaust air and further actual values (X2) for temperature and humidity of the outside air, and the control vectors (K, B) described and the zero point (W3) can be projected onto this, and further, from these projections a setting signal (Y7) for the energy recovery can be generated.

**7.** Device according to claim 6, characterised in that the controller (1) is provided with further means (5) by means of which in the status representation (tx or respectively hx) a comfort zone is defined around the ambient air desired value (W1), and by means of which when there is an actual value (X1) outside the comfort zone, it can be adjusted to the limits of the comfort zone.

**Revendications**

**1.** Procédé pour régler la température et l'humidité de l'air dans une installation de climatisation avec récupération d'énergie à partir de l'air ambiant ou de l'air évacué, selon lequel on obtient des signaux de réglage (Y1; Y3; Y5) pour la température et l'humidité de l'air, caractérisé en ce

qu'à partir de valeurs de consigne (W1) et de valeurs réelles (X1) de l'air ambiant on calcule un besoin en température ($Y_T$) et un besoin en humidité ($Y_F$),
qu'on marque, dans une représentation bidimensionnelle d'état (tx et hx), le besoin en température ($Y_T$) ou le besoin en humidité ($Y_F$) avec un vecteur respectif de direction ($\vec{y}_T$ ou $\vec{y}_F$) et une pondération (wh ou wk ou wf ou wdef), déterminée par la configuration de l'installation, de la valeur respective sous la forme de vecteurs de réglages résultants ($\vec{K}$, $\vec{B}$),
une première dimension représentant la température de l'air et une seconde dimension l'humidité de l'air dans la représentation d'état (tx ou hx), et
les vecteurs de régulation ('K, 'B) étant marqués avec une valeur de consigne (W3) de l'air arrivant en tant que point zéro,
que dans la représentation d'état (tx ou hx), on détermine un vecteur (ERG) sur une droite s'étendant entre les valeurs réelles (X1) pour la température et l'humidité de l'air ambiant ou de l'air évacué et d'autres valeurs réelles (X2) pour la température et l'humidité de l'air extérieur, et qu'on projette lesdits vecteurs de régulation ($\vec{K}$, $\vec{B}$) et le point zéro (W3) sur ce vecteur, et
qu'on détermine, à partir de ces projections, signal de réglage (Y7) pour la récupération d'énergie.

**2.** Procédé selon la revendication 1, caractérisé en ce que la détermination du signal de réglage (Y7) pour la récupération d'énergie s'effectue à partir des projections par le fait que les projections des deux vecteurs de régulation ($\vec{K}$, $\vec{B}$) sont obtenues à partir de la projection (W3P) de la valeur de consigne (W3) de l'air arrivant sont additionnées vectoriellement.

**3.** Procédé selon la revendication 1 ou 2, caractérisé en ce que on définit une zone de confort dans le représentation d'état (tx ou hx), autour de la valeur de consigne (W1) de l'air ambiant, et qu'on effectue un réglage à partir d'une valeur réelle (X1) située à l'extérieur de la zone de contrôle, avec un coût minimum, dans la limite de la zone de confort et qu'on utilise à l'intérieur de la zone de confort uniquement l'énergie récupérée.

**4.** Procédé selon l'une des revendications 1 à 3, caractérisé en ce que la régulation est effectuée sur l'humidité absolue de l'air et que cette humidité est calculée sur la base de la température et de l'humidité relative.

**5.** Procédé selon l'une des revendications 1 à 4, caractérisé en ce que lors de la détermination des vecteurs de régulation ($\vec{K}$, $\vec{B}$), la pondération des actions possibles s'effectue sur la base de leurs coûts.

**6.** Dispositif pour la mise en oeuvre du procédé selon la revendication 1, comprenant des moyens pour régler la température et l'humidité de l'air dans une installation de climatisation et des moyens de récupération d'énergie à partir de l'air ambiant ou de l'air évacué, caractérisé par un régulateur (1),

> qui comporte des premiers moyens (2,3), à l'aide desquels un besoin en température ($Y_T$) et un besoin en humidité ($Y_F$) peuvent être calculés à partir de valeurs de consigne (W1) et de valeurs réelles (X1) de l'air ambiant,
> qui comporte des moyens (4), à l'aide desquels le besoin en température ($Y_T$) et le besoin en humidité ($Y_F$) peut être portés, avec un vecteur respectif de direction ($\vec{y}_T$ ou $\vec{y}_F$) et une pondération (wh ou wk ou wf ou wdef), déterminée par la configuration de l'installation, de la valeur absolue respective sous la forme de vecteurs de réglage résultants ($\vec{K}$, $\vec{B}$) dans une représentation d'état (tx et hx) de telle sorte,
> que les vecteurs de régulation ($\vec{K}$, $\vec{B}$) possèdent en tant que point zéro une valeur de consigne (W3) de l'air arrivant, et
> qu'en outre dans la représentation d'état (tx ou hx), on peut déterminer un vecteur (ERG) sur une droite s'étendant entre les valeurs réelles (X1) pour la température et l'humidité de l'air ambiant ou de l'air évacué et d'autres valeurs réelles (X2) pour la température et l'humidité de l'air extérieur, et qu'on peut projeter lesdits vecteurs de régulation (K, B) et le point zéro (W3) sur ce vecteur, et
> en outre un signal de réglage (Y7) pour la récupération d'énergie peut être produit à partir de ces projections.

**7.** Dispositif selon la revendication 6, caractérisé en ce que le régulateur (1) comporte en outre des moyens (5) à l'aide desquels une zone de confort est définie autour de la valeur de consigne (W1) de l'air ambiant, dans la représentation d'état (tx ou hx), et à l'aide desquels, dans le cas où une valeur réelle (X1) est située à l'extérieur de la zone de confort, cette valeur est réglable sur les limites de la zone de confort.

FIG.1

FIG.2

FIG. 3

FIG. 4

FIG.7

FIG.5

FIG. 6

FIG.8

14